# FASCICULE DE BREVET EUROPEEN

(11) **EP 0 651 453 B1**
(45) Date de publication et mention de la délivrance du brevet: **23.04.1997**
(21) Numéro de dépôt: 93420429.8
(22) Date de dépôt: 28.10.1993
(51) Int. Cl.: H01M 10/40, H01M 6/10

(54) **Cellule électrochimique pour les batteries lithium-électrolyte polymère (ACEP)**
Elektrochemische Zelle für Lithium-Polymerelektrolyt Batterien
Electrochemical cell for lithium-polymer electrolyte batteries

(43) Date de publication de la demande: 03.05.1995
(73) Titulaire: HYDRO-QUEBEC, Montreal, Quebec J2Z 1A4 (CA)
(72) Inventeur: Duval, Michel, Montréal, Québec, H3W IT8 (CA); Giguere, Yves, Ste-Julie, Québec, J3E IK2 (CA)
(74) Mandataire: Guerre, Dominique

(56) Documents cités:
- EP-A- 0 357 399
- EP-A- 0 397 523
- US-A- 2 880 259
- US-A- 3 379 574
- PATENT ABSTRACTS OF JAPAN vol. 14, no. 308 (E-947)(4251) 3 Juillet 1990 & JP-A-02 100 268 (BROTHER IND LTD)
- PATENT ABSTRACTS OF JAPAN vol. 14, no. 229 (E-928)(4172) 15 Mai 1990 & JP-A-02 060 072 (TOSHIBA BATTERY CO LTD)

## Description

L'invention porte sur les cellules électrochimiques pour les batteries lithium-électrolyte polymère solide. Plus particulièrement, l'invention concerne les cellules électrochimiques à base d'anode de lithium et d'électrolyte polymère solide, et à collection de courant latérale, comportant une bande de matériau isolant disposée de façon à empêcher l'arête libre du collecteur faisant face à l'électrolyte et/ou à la couche d'électrode négative de venir percer l'électrolyte et/ou de court-circuiter les deux électrodes. L'invention concerne aussi un procédé d'élaboration de cellules électrochimiques dont l'arête libre du collecteur est protégé par une bande de matériau isolant.

Le principe général des batteries à électrolyte polymère du type ACEP (accumulateur à l'électrolyte polymère) et anode de lithium est décrit dans le brevet Armand U.S. 4.303.748. Les matériaux à utiliser de préférence dans ces batteries (copolymères, polymères réticulés, sels, matériaux actifs d'électrodes) ainsi que les méthodes pour les mettre en forme sont décrites, entre autre, dans les brevets U.S. No. 4.578.326 et U.S. No. 4.758.487.

La demande de brevet européen, publiée sous le numéro EP-A- 0 397 523, décrit une cellule électrochimique élémentaire, et le traitement de surface du collecteur, afin d'obtenir une meilleure adhésion avec la cathode. Une bande isolante en polypropylène peut être utilisée entre l'anode et l'électrolyte. Toutefois, l'enseignement de ce document ne permet pas de fabriquer des batteries au Li/électrolyte polymère de taille commerciale, car celles-ci nécessitent de grandes longueurs de film de cellule élémentaire (typiquement de 15 à 30 mètres) pour un contenu énergétique moyen (de 50 à 100 wh), à cause de la très faible épaisseur de la cellule élémentaire (environ 100 pm). Ce film est ensuite typiquement enroulé sur lui-même en une centaine de tours, pour former une batterie en forme de cylindre. Or, même en utilisant une bande de polypropylène très mince (8 µm) une surépaisseur importante se bâtit aux extrémités du cylindre, si l'on tente de l'incorporer de la manière décrite entre l'anode et l'électrolyte, produisant un cylindre déformé où la pression n'est pas uniforme et où des problèmes d'interface électrolyte/électrodes vont se manifester, sans parler de la perte de contenu énergétique volumique quand on cherchera à assembler plusieurs de ces cylindres en parallèle.

Une batterie ACEP est constituée d'un collecteur métallique de l'électrode positive (cathode), d'un film de cathode, d'un film d'électrolyte polymère, d'un film d'électrode négative (anode en lithium) et d'un film isolant. Chacun de ces films a typiquement une épaisseur comprise entre 5 et 50 µm, pour une épaisseur totale finale comprise entre 100 et 150 µm, une trentaine de mètres de film de 15 cm de large étant typiquement nécessaire pour obtenir une batterie de 100 Wh.

Un mode d'assemblage approprié consiste à décaler légèrement chacun de ces films, de façon à pouvoir collecter latéralement, plutôt que par les extrémités du film, le courant provenant de chacune des électrodes, comme dans un condensateur. Dans cette configuration une des arêtes du collecteur sert à recueillir le courant provenant de la cathode. L'autre arête, qu'on appellera dans le reste du texte l'arête libre du collecteur, fait face à l'électrolyte et/ou à l'électrode négative, par suite du décalage. Un tel assemblage pose le problème suivant: le collecteur métallique de l'électrode positive (cathode) est en général constitué par un feuillard d'aluminium, de nickel ou d'un autre métal qui, même à faible épaisseur, présente une arête libre coupante capable de venir en contact direct avec l'électrode négative ou de percer à l'assemblage les couches d'électrolyte, constituées d'un polymère relativement mou, et de provoquer un court-circuit avec l'anode de lithium, conduisant à la perte de la batterie.

La présente invention propose d'installer notamment entre le collecteur de l'électrode positive et l'électrode négative, à cheval sur l'arête libre du collecteur métallique, une bande de film isolant, plus rigide que l'électrolyte et résistant parfaitement à la coupure par l'arête libre du collecteur. Cette bande isolante peut également assurer l'isolation entre le collecteur et l'électrode négative quand l'électrolyte est plus court que le collecteur ou quand le collecteur est constitué par un matériau réagissant électrochimiquement avec le lithium comme le polyester métallisé.

Le matériau de base de cette bande isolante est un film ou un tissu de plastique isolant ne réagissant pas chimiquement ou électrochimiquement avec les matériaux actifs de la batterie (lithium, électrolyte, électrode positive) et ne se déformant pas à sa température d'utilisation. Du film de polypropylène, de polyéthylène, de polyuréthane, ou de tout autre plastique usuel compatible peut notamment être utilisé, ainsi que des films par ailleurs incompatibles du côté lithium [polyester, TEFLON*, FEP (polymère fluoré d'éthylène et de propylène), polyamide] mais rendus compatibles par un mince revêtement en surface de polyéthylène ou polypropylène. Des films ou tissus en matériau inorganique (fibre de verre, de nitrure de bore) sont également possibles. Le polypropylène de grade condensateur est particulièrement approprié en raison de son caractère inerte et de l'absence d'impuretés.
*Marque de commerce

La bande isolante peut être également recouverte dans certains cas, du côté du collecteur métallique, d'un mince revêtement d'un adhésif thermoscellable de façon à empêcher le déplacement de la bande à l'assemblage. Cet adhésif doit également être compatible avec les matériaux actifs de la batterie et notamment ne pas contenir de produits volatils pouvant réagir et réduire la performance de la batterie. Il doit être thermoscellable à des températures acceptables pour les matériaux de la batterie de façon à ne pas se décoller. Des adhésifs à base de polyéthylène ou de polyester thermoplastique ont donné satisfaction. Un exemple de film isolant thermoscellable approprié est le Transkote # 150 OPP de la compagnie Transilwrap du Canada à Toronto, utilisé pour la plastification des étiquettes ou des documents. Ce film constitué de polypropylène recouvert d'adhésif polyester thermoplastique et utilisé dans une batterie au lithium polymère a montré un comportement au cyclage satisfaisant et l'absence d'effet nuisible à la performance de la batterie par rapport à une batterie ne contenant pas la bande isolante.

Le choix de l'épaisseur et de la largeur de la bande isolante est en général effectué de façon à minimiser son poids et son volume dans la batterie, à faciliter sa mise en place pendant l'assemblage et à ne pas provoquer de surépaisseur. Une bande de 5 à 50 µ d'épaisseur, typiquement 25 µ et de 3 à 12 mm de largeur, typiquement 6 mm donne en général satisfaction, l'essentiel étant que l'arête soit bien protégée et que la bande ne puisse se déplacer une fois en place.

La mise en place de la bande peut être effectuée à différentes étapes de l'assemblage de la batterie, comme on peut le voir dans les exemples qui suivent, soit sur le collecteur seul, sur le collecteur déjà recouvert de sa cathode, ou sur le collecteur recouvert de sa cathode et de son électrolyte.

De façon générale, l'invention concerne une cellule électrochimique constituée par une superposition de couches d'une électrode positive, d'un électrolyte polymère solide, ainsi qu'une électrode négative au lithium, l'électrode positive étant en contact avec une couche de collecteur métallique et l'électrode négative étant recouverte d'un film isolant, les couches d'électrode négative et de collecteur métallique étant décalées l'une par rapport à l'autre afin de permettre de collecter le courant latéralement, le collecteur ayant alors une arête libre, telle que définie précédemment et qu'il faut protéger. La cellule électrochimique comporte une bande en un matériau isolant ne réagissant pas avec les matériaux des électrodes et de l'électrolyte et ne se déformant pas à la température d'utilisation de la cellule. La bande en matériau isolant est disposée entre la couche d'électrolyte et la couche de collecteur à cheval sur l'arête libre du collecteur, l'électrode positive et la bande en matériau isolant étant disposées côte à côte sur le collecteur de façon à ce que lorsqu'on lamine les différentes couches incluant le collecteur et l'isolant pour former la cellule, la bande empêche l'arête libre du collecteur de venir percer la couche d'électrolyte et/ou de court-circuiter par le fait même les deux électrodes. Cette bande isolante peut également assurer l'isolation entre le collecteur et l'électrode négative quand l'électrolyte est plus court que le collecteur ou quand le collecteur est constitué par un matériau réagissant électrochimiquement avec le lithium comme le polyester métallisé.

Selon une autre réalisation préférée de l'invention, la bande en matériau isolant est thermoscellable de façon à ce que la partie de cette dernière en contact avec le collecteur puisse être thermocollée sur ce dernier.

Selon une autre réalisation préférée de l'invention, le matériau de la couche d'électrolyte est légèrement collant et la bande en matériau isolant est non thermoscellable faisant en sorte que l'adhésion avec la couche d'électrolyte soit assurée uniquement par cette dernière. De préférence, la bande en matériau isolant est disposée sur la couche d'électrolyte entre cette dernière et la couche d'électrode négative, de façon à chevaucher et protéger l'arête libre du collecteur.

Selon une autre réalisation de l'invention, la bande en matériau isolant non thermoscellable est disposée sous la couche d'électrolyte entre cette dernière et la couche de collecteur, la bande en matériau isolant étant à cheval sur l'arête libre du collecteur, l'électrode positive et la bande en matériau isolant étant disposées côte à côte.

La bande en matériau isolant a généralement une épaisseur comprise entre environ 5 µ et 50 µ, de préférence environ 25 µ pour la bande thermoscellable et 8 µ pour la bande non thermoscellable.

Selon une autre réalisation de l'invention, la bande en matériau isolant thermoscellable est thermocollée sur le collecteur au moyen d'un adhésif thermoscellable ou thermoplastique compatible avec les éléments de la cellule. Par exemple, l'adhésif peut avoir une épaisseur entre environ 1 et 10 µ, notamment environ 1 à 2 µ.

Selon une autre réalisation de l'invention, la bande en matériau isolant est soit en polyprolylène ou en polyéthylène, soit en TEFLON, FEP, polyester, ou polyamide, recouverts d'une mince couche de polyéthylène ou propylène d'environ 1 à 10 µ.

Selon une autre réalisation la bande en matériau isolant a une largeur comprise entre environ 3 et 125 mm, par exemple environ 6 mm.

L'invention concerne aussi un procédé de préparation d'une cellule électrochimique selon lequel on superpose des couches d'une électrode positive, d'un électrolyte polymère solide, ainsi que d'une électrode négative au lithium, on met l'électrode positive en contact avec une couche d'un collecteur métallique, l'électrode négative étant recouverte d'un film isolant, on décale les couches d'électrode négative et de collecteur l'une par rapport à l'autre afin de permettre de collecter le courant latéralement, et on protège l'arête libre du collecteur. Selon ce procédé, on dispose une bande, en un matériau isolant ne réagissant pas avec les matériaux des électrodes, du collecteur et de l'électrolyte et ne se déformant pas aux températures d'utilisation de la cellule, entre les couches constitutives de la cellule, de façon à ce que lorsqu'on lamine les différentes couches incluant le collecteur et le film isolant pour former la cellule, la bande empêche alors l'arête libre du collecteur de venir percer la couche d'électrolyte et/ou de court-circuiter par le fait même les deux électrodes. Comme mentionné ci-dessus, cette bande isolante peut également assurer l'isolation entre le collecteur et l'électrode négative quand l'électrolyte est plus court que le collecteur, ou quand le collecteur est constitué par un matériau réagissant électrochimiquement avec le lithium comme le polyester métallisé.

Selon une autre réalisation de l'invention, on dispose la bande en matériau isolant entre la couche d'électrolyte et la couche de collecteur, à cheval sur l'arête libre du collecteur, et de façon à ce que l'électrode positive et la bande en matériau isolant soient côte à côte.

Selon une autre réalisation, on utilise une couche d'électrolyte en matériau légèrement collant, et une bande en matériau isolant non thermoscellable, et l'on applique la bande sur la couche d'électrolyte collant.

Selon une autre réalisation de l'invention, on dispose la bande en matériau isolant sur la couche d'électrolyte, entre cette dernière et la couche d'électrode négative, de façon à chevaucher et protéger l'arête libre du collecteur.

Selon une autre réalisation, on utilise une couche d'électrolyte en matériau légèrement collant, et une bande en matériau isolant non thermoscellable, on applique cette dernière sous la couche d'électrolyte collant entre cette dernière et la couche d'électrode positive, à cheval sur l'arête libre du collecteur, et à côté de l'électrode positive.

L'invention est illustrée sans caractère limitatif par les dessins annexés dans lesquels:
- la figure 1 est un schéma illustratif d'une cellule électrochimique selon l'invention, comportant une bande de matériau isolant;
- la figure 2 est un schéma illustratif d'une autre cellule électrochimique selon l'invention;
- la figure 3 est un schéma montrant le laminage d'une cellule selon l'invention, incluant une bande isolante; et
- la figure 4 est une courbe montrant le comportement au cyclage d'une cellule électrochimique selon l'invention.

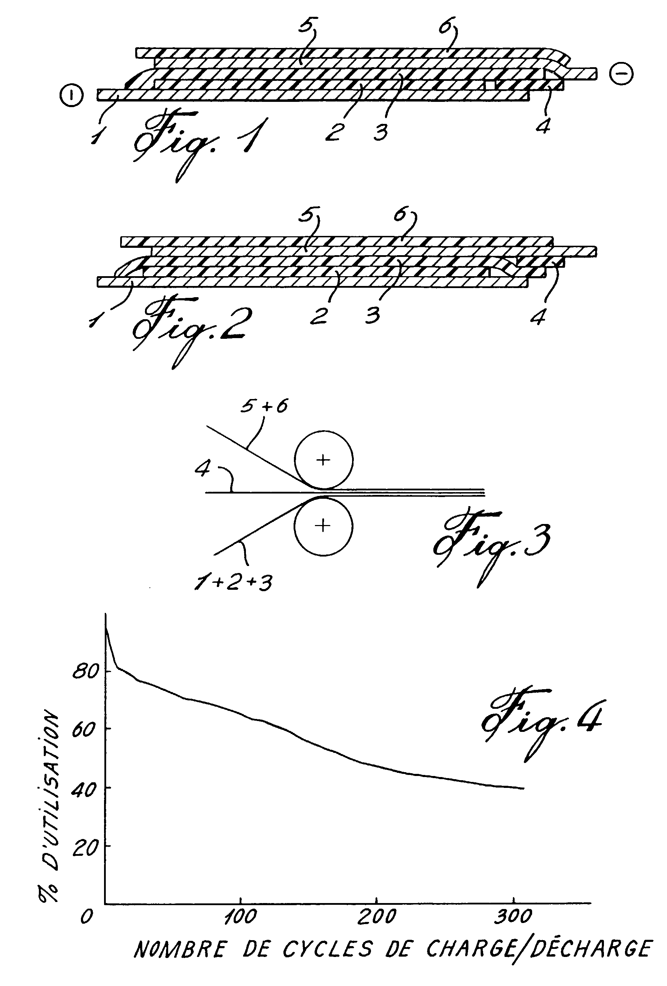

En se référant aux dessins, plus particulièrement la figure 1, on verra que la cellule électrochimique est par exemple constituée d'une électrode positive 2 à base d'oxyde vanadium comportant un collecteur métallique 1 en aluminium. On aperçoit aussi une électrode négative 5 en lithium recouverte d'un film d'isolant 6 en polypropylène. L'électrolyte 3 disposé entre les deux électrodes 2 et 5 est en polymère solide tel que défini dans les brevets U.S. Nos. 4.303.748; 4.578.526 et 4.758.487. On verra que les diverses couches ont été decalées pour permettre de collecter le courant latéralement (bornes ⊕ et ⊖ sur la figure). Au niveau de l'électrode positive 2, entre le collecteur 1 et l'électrolyte 3, on a placé une bande 4 de matériau isolant, notamment en polypropylène ou autres matériaux plastiques tels que mentionnés ci-dessus, à cheval sur l'arête libre du collecteur. Cette bande isolante 4 peut également assurer l'isolation entre le collecteur 1 et l'électrode négative 5 quand l'électrolyte 3 est plus court que le collecteur 1 (ce qui n'est pas illustré sur les dessins) et quand le collecteur 1 est constitué par un matériau réagissant électrochimiquement avec le lithium comme le polyester métallisé.

Selon une alternative illustrée en figure 2, la bande isolante 4 a été disposée entre l'électrolyte 3, et l'électrode négative en lithium 5 mais en même position à cheval sur l'arête libre du collecteur. En se référant maintenant à la figure 3 , on verra comment la bande isolante latérale 4 est laminée avec le film de lithium 5 et une demi-pile constituée par un collecteur 1, une électrode positive 2 et un électrolyte polymère solide 3.

L'invention est de même illustrée par les exemples de réalisations qui suivent donnés sans caractère limitatif.

### EXEMPLE 1

Un feuillard d'aluminium de 16 cm de largeur et de 15 µ d'épaisseur est utilisé comme collecteur métallique et support d'enduction pour l'électrode positive. Un rouleau de ce feuillard d'aluminium est installé sur la machine d'enduction et envoyé tout d'abord dans un laminoir constitué d'un rouleau d'acier chauffé à 85°C et d'un rouleau de caoutchouc silicone. Une bande étroite de Transkote Transilwrap de 25 µ d'épaisseur et de 6 mm de large est laminée de part et d'autre d'une des arêtes du feuillard d'aluminium, de façon que 3 mm reposent sur l'aluminium et 3 mm à l'extérieur de l'aluminium. L'adhésif thermoplastique fond pendant le passage dans le laminoir, et reste collé de façon permanente au feuillard d'aluminium à la sortie du laminoir. Le feuillard d'aluminium muni de sa bande de protection le long de son arête est alors envoyé vers la tête d'épandage de la machine. La solution de positive, à base d'oxyde de vanadium, y est déposée puis le solvant évaporé dans un tunnel de séchage pour obtenir un film d'électrode positive de 40 µ d'épaisseur et 15 cm de largeur. Cet ensemble constitué du collecteur d'aluminium, du film d'électrode positive et de la bande de protection de l'arête est alors laminé avec un film d'électrolyte de 30 µ d'épaisseur et 16 cm de largeur centré sur cet ensemble, puis avec un film de lithium de 20 µ d'épaisseur et 16 cm de largeur, décalé par rapport à l'aluminium de façon à déborder d'environ 2 mm à l'extérieur de la bande de protection de l'arête d'aluminium. On rajoute finalement un film de polypropylène de 16 cm et de 8µ d'épaisseur pour pouvoir enrouler la batterie sur elle-même sans court-circuiter les électrodes. L'ensemble ainsi réalisé constitue une batterie de type ACEP, de 3,4 volts dont la collection de courant s'effectue sur les côtés.

### EXEMPLE 2

On prépare tout d'abord le film d'électrode positive sur son collecteur d'aluminium et on le sèche dans le couloir de séchage, on thermocolle alors par laminage la bande de Transilwrap à cheval sur l'une des arêtes de l'aluminium, puis on procède comme dans l'exemple 1 pour réaliser la pile finale.

### EXEMPLE 3

On prépare tout d'abord le film d'électrode positive sur son collecteur d'aluminium, on le sèche, puis on lamine le film d'électrolyte sur le film de positive pour obtenir un film de "demi-pile" (collecteur + positive + électrolyte), on lamine alors simultanément les 3 films suivants: la demi-pile, une bande de polypropylène non-thermoscellable de 6 mm de largeur et de 8 µ d'épaisseur, de façon à chevaucher et protéger l'arête vive de l'aluminium, et le film d'électrode de lithium. Après addition du film isolant sur l'électrode de lithium, on obtient la pile finale. C'est dans ce cas l'électrolyte lui-même, légèrement collant, qui sert d'adhésif pour la bande de polypropylène et l'empêche de se déplacer.

## Revendications

1. Cellule électrochimique constituée par une superposition de couches d'une électrode positive, d'un électrolyte polymère solide, ainsi que d'une électrode négative au lithium, l'électrode positive étant en contact avec une couche de collecteur métallique et l'électrode négative étant recouverte d'un film isolant, les couches d'électrode négative et de collecteur étant décalées l'une par rapport à l'autre afin de permettre de collecter le courant latéralement, le collecteur ayant alors une arête libre qu'il faut protéger, ladite cellule étant protégée par l'incorporation dans ladite cellule électrochimique d'une bande en un matériau isolant ne réagissant pas avec les matériaux des électrodes et de l'électrolyte et ne se déformant pas à la température d'utilisation de ladite cellule, ladite bande en matériau isolant étant disposée entre ladite couche d'électrolyte et ladite couche de collecteur, à cheval sur l'arête libre du collecteur, l'électrode positive et la bande en matériau isolant étant disposées côte à côte, de façon à ce que lorsqu'on lamine les différentes couches incluant le collecteur et le film isolant pour former la cellule, ladite bande empêche l'arête libre du collecteur de venir percer la couche d'électrolyte et/ou de court-circuiter par le fait même les deux électrodes, ladite bande isolante pouvant également assurer l'isolation entre le collecteur et l'électrode négative quand l'électrolyte est plus court que le collecteur ou quand le collecteur est constitué par un matériau réagissant électrochimiquement avec le lithium comme le polyester métallisé.

2. Cellule électrochimique selon la revendication 1, caractérisée en ce que la bande en matériau isolant est thermoscellable de façon à ce que la partie de cette dernière en contact avec le collecteur puisse être thermocollée sur ce dernier.

3. Cellule électrochimique selon la revendication 1, caractérisée en ce que le matériau de la couche d'électrolyte est légèrement collant et la bande en matériau isolant est non thermoscellable faisant en sorte que l'adhésion avec la couche d'électrolyte soit assurée uniquement par cette dernière.

4. Cellule électrochimique selon la revendication 3, caractérisée en ce que la bande en matériau isolant est disposée sur la couche d'électrolyte entre cette dernière et la couche d'électrode négative, de façon à chevaucher et protéger l'arête libre du collecteur.

5. Cellule électrochimique selon la revendication 3, caractérisé en ce que la bande en matériau isolant non thermoscellable est disposée sous la couche d'électrolyte entre cette dernière et la couche de collecteur, ladite bande en matériau isolant étant à cheval sur l'arête libre du collecteur, l'électrode positive et la bande en matériau isolant étant disposées côte à côte.

6. Cellule électrochimique selon la revendication 1, caractérisée en ce que la bande en matériau isolant possède une épaisseur entre environ 5 µ et 50 µ.

7. Cellule électrochimique selon la revendication 1, caractérisée en ce que l'épaisseur de la bande en matériau isolant est environ 25 µ lorsqu'elle est thermoscellable.

8. Cellule électrochimique selon la revendication 1, caractérisée en ce que l'épaisseur de la bande en matériau isolant est environ 8 µ lorsqu'elle est non thermoscellable.

9. Cellule électrochimique selon la revendication 1, caractérisée en ce que la bande en matériau isolant est thermoplastique, thermoréticulable et compatible avec les autres matériaux de ladite cellule.

10. Cellule électrochimique selon la revendication 9, caractérisée en ce que la bande en matériau isolant est soit en polypropylène ou en polyéthylène, soit en TEFLON, FEP polyester ou polyamide recouverts d'une mince couche de polyéthylène ou polypropylène d'environ 1 à 10 µ.

11. Cellule électrochimique selon la revendication 9, caractérisée en ce que la bande en matériau isolant est thermocollée sur le collecteur au moyen d'un adhésif thermoscellable ou thermoplastique compatible avec les éléments de la cellule.

12. Cellule électrochimique selon la revendication 11, caractérisée en ce que l'adhésif a une épaisseur entre environ 1 et 10 µ.

13. Cellule électrochimique selon la revendication 12, caractérisée en ce que l'épaisseur de l'adhésif est d'environ 1 à 2 µ.

14. Cellule électrochimique selon la revendication 11, caractérisée en ce que l'adhésif est du TRANSKOTE # 150 OPP.

15. Cellule électrochimique selon la revendication 12, caractérisée en ce que la bande en matériau isolant a une largeur entre environ 3 et 125 mm.

16. Cellule électrochimique selon la revendication 13, caractérisée en ce que la largeur de la bande en matériau isolant est d'environ 6 mm.

17. Cellule électrochimique selon la revendication 1, caractérisée en ce que la bande en matériau isolant est constituée d'un tissu synthétique chimiquement et électrochimiquement isolant et compatible avec les éléments de la cellule.

18. Procédé de préparation d'une cellule électrochimique selon lequel on superpose des couche d'une électrode positive, d'un électrolyte polymère solide, ainsi que d'une électrode négative au lithium, on met l'électrode positive en contact avec une couche d'un collecteur métallique, l'électrode négative étant recouverte d'un film isolant, on décale les couches d'électrode négative et de collecteur l'une par rapport à l'autre afin de permettre de collecter le courant latéralement, et on protège l'arête libre en disposant une bande, en un matériau isolant ne réagissant pas avec les matériaux des électrodes, du collecteur et de l'électrolyte et ne se déformant pas aux températures d'utilisation de ladite cellule, entre les couches constitutives de la cellule, de façon à ce que lorsqu'on lamine les différentes couches incluant le collecteur et le film isolant pour former la cellule, ladite bande empêche l'arête libre du collecteur de venir percer la couche d'électrolyte et/ou de court-circuiter les deux électrodes, cette bande isolante pouvant également assurer l'isolation entre le collecteur et l'électrode négative quand l'électrolyte est plus court que le collecteur, ou quand le collecteur est constitué par un matériau réagissant électrochimiquement avec le lithium comme le polyester métallisé.

19. Procédé selon la revendication 18, caractérisé en ce que l'on dispose ladite bande en matériau isolant entre ladite couche d'électrolyte et ladite couche de collecteur, à cheval sur l'arête libre du collecteur, et de façon à ce que l'électrode positive et la bande en matériau isolant soient côte à côte.

20. Procédé selon la revendication 19, caractérisé en ce qu'on utilise une bande en matériau isolant thermoscellable et que l'on thermocolle ladite bande sur ledit collecteur pour la maintenir en place.

21. Procédé selon la revendication 18, caractérisé en ce qu'on utilise une couche d'électrolyte en matériau légèrement collant, et une bande en matériau isolant non thermoscellable, et que ladite bande reste en place uniquement par adhésion sur la couche d'électrolyte.

22. Procédé selon la revendication 21, caractérisé en ce que l'on dispose la bande en matériau isolant non thermoscellable sur la couche d'électrolyte, entre cette dernière et la couche d'électrode négative, de façon à ce que ladite bande chevauche et protège l'arête libre du collecteur.

23. Procédé selon la revendication 21, caractérisé en ce qu'on dispose la bande en matériau isolant non thermoscellable, sous la couche d'électrolyte entre cette dernière et la couche d'électrode positive, à cheval sur l'arête libre du collecteur, et on place côte et côte l'électrode positive et la bande en matériau isolant.

## Claims

1. Electrochemical cell consisting of a superposition of layers of a positive electrode, of a solid polymer electrolyte and of a lithium negative electrode, the positive electrode being in contact with a metallic collector layer and the negative electrode being covered with an insulating film, the negative electrode and collector layers being staggered in relation to one another in order to make it possible to collect the current laterally, the collector then having a free ridge which must be protected, the said cell being protected by the incorporation into the said electrochemical cell of a strip made of an insulating material which does not react with the materials of the electrodes and of the electrolyte and which does not distort at the working temperature of the said cell, the said strip of insulating material being placed between the said electrolyte layer and the said collector layer, astride the free ridge of the collector, the positive electrode and the strip of insulating material being placed side by side, so that when the various layers including the collector and the insulating film are laminated to form the cell, the said strip prevents the free ridge of the collector from piercing the electrolyte layer and/or from thereby short-circuiting the two electrodes, the said insulating strip being also capable of ensuring the insulation between the collector and the negative electrode when the electrolyte is shorter than the collector or when the collector consists of a material which reacts electrochemically with lithium, like metallized polyester.

2. Electrochemical cell according to Claim 1, characterized in that the strip of insulating material is heat-sealable so that the portion of this strip in contact with the collector can be heat-bonded onto the latter.

3. Electrochemical cell according to Claim 1, characterized in that the material of the electrolyte layer is slightly adhesive and the strip of insulating material is not heat-sealable, with the result that the adhesion to the electrolyte layer is ensured solely by the latter.

4. Electrochemical cell according to Claim 3, characterized in that the strip of insulating material is placed over the electrolyte layer between the latter and the negative electrode layer, so as to straddle and protect the free ridge of the collector.

5. Electrochemical cell according to Claim 3, characterized in that the strip of insulating material which is not heat-sealable is placed under the electrolyte layer between the latter and the collector layer, the said strip of insulating material being astride the free ridge of the collector, the positive electrode and the strip of insulating material being placed side by side.

6. Electrochemical cell according to Claim 1, characterized in that the strip of insulating material has a thickness of between approximately 5 µ and 50 µ.

7. Electrochemical cell according to Claim 1, characterized in that the thickness of the strip of insulating material is approximately 25 µ when it is heat-sealable.

8. Electrochemical cell according to Claim 1, characterized in that the thickness of the strip of insulating material is approximately 8 µ when it is not heat-sealable.

9. Electrochemical cell according to Claim 1, characterized in that the strip of insulating material is thermoplastic, thermally crosslinkable and compatible with the other materials of the said cell.

10. Electrochemical cell according to Claim 9, characterized in that the strip of insulating material is made either of polypropylene or of polyethylene or of Teflon, FEP polyester or polyamide which are covered with a thin layer of polyethylene or polypropylene, of approximately 1 to 10 µ.

11. Electrochemical cell according to Claim 9, characterized in that the strip of insulating material is heat-bonded onto the collector by means of a heat-sealable or thermoplastic adhesive which is compatible with the components of the cell.

12. Electrochemical cell according to Claim 11, characterized in that the adhesive has a thickness of between approximately 1 and 10 µ.

13. Electrochemical cell according to Claim 12, characterized in that the thickness of the adhesive is from approximately 1 to 2 µ.

14. Electrochemical cell according to Claim 11, characterized in that the adhesive is Transkote # 150 OPP.

15. Electrochemical cell according to Claim 12, characterized in that the strip of insulating material has a width between approximately 3 and 125 mm.

16. Electrochemical cell according to Claim 13, characterized in that the width of the strip of insulating material is approximately 6 mm.

17. Electrochemical cell according to Claim 1, characterized in that the strip of insulating material consists of a synthetic fabric which is chemically and electrochemically insulating and compatible with the components of the cell.

18. Process for the preparation of an electrochemical cell, according to which layer [sic] of a positive electrode, of a solid polymer electrolyte and of a lithium negative electrode are superposed, the positive electrode is placed in contact with a layer of a metallic collector, the negative electrode being covered with an insulating film, the negative electrode and collector layers are staggered in relation to one another in order to make it possible to collect the current laterally, and the free ridge is protected by placing a strip made of an insulating material which does not react with the materials of the electrodes, of the collector and of the electrolyte, and which does not distort at the working temperatures of the said cell, between the constituent layers of the cell, so that when the various layers including the collector and the insulating film are laminated to form the cell, the said strip prevents the free ridge of the collector from piercing the electrolyte layer and/or from short-circuiting the two electrodes, this insulating strip being also capable of ensuring the insulation between the collector and the negative electrode when the electrolyte is shorter than the collector or when the collector consists of a material which reacts electrochemically with lithium, like metallized polyester.

19. Process according to Claim 18, characterized in that the said strip of insulating material is placed between the said electrolyte layer and the said collector layer, astride the free ridge of the collector, and so that the positive electrode and the strip of insulating material are side by side.

20. Process according to Claim 19, characterized in that a strip of heat-sealable insulating material is employed and that the said strip is heat-bonded to the said collector to maintain it in place.

21. Process according to Claim 18, characterized in that a layer of electrolyte made of slightly adhesive material and a strip of insulating material which is not heat-sealable are employed and that the said strip remains in place solely by adhesion to the electrolyte layer.

22. Process according to Claim 21, characterized in that the strip of insulating material which is not heat-sealable is placed over the electrolyte layer, between the latter and the negative electrode layer, so that the said strip straddles and protects the free ridge of the collector.

23. Process according to Claim 21, characterized in that the strip of insulating material which is not heat-sealable is placed under the electrolyte layer between the latter and the positive electrode layer, astride the free ridge of the collector, and the positive electrode and the strip of insulating material are placed side and [sic] side.

## Patentansprüche

1. Elektrochemische Zelle, welche aus übereinander angeordneten Schichten einer positiven Elektrode, eines Polymer-Feststoffelektrolyts sowie einer negativen Elektrode aus Lithium gebildet ist, wobei die positive Elektrode mit einer metallischen Kollektorschicht in Kontakt steht und die negative Elektrode mit einem Isolierfilm bedeckt ist, wobei die Schicht der negativen Elektrode und die Kollektorschicht gegeneinander versetzt sind, um den seitlichen Abgriff des Stroms zu ermöglichen, wobei der Kollektor somit einen freien Rand aufweist, welchen es zu schützen gilt, wobei die Zelle durch das Einfügen eines Streifens aus einem mit den Elektroden- und Elektrolytmaterialien nicht reagierenden und sich bei der Betriebstemperatur der Zelle nicht deformierenden Isoliermaterial in die elektrochemische Zelle geschützt ist, wobei der Streifen aus Isoliermaterial zwischen der Elektrolytschicht und der Kollektorschicht angeordnet ist, und zwar auf dem freien Rand des Kollektors, wobei die positive Elektrode und der Streifen aus Isoliermaterial nebeneinander derart angeordnet sind, daß, wenn die verschiedenen Schichten einschließlich des Kollektors und des Isolierfilms schichtweise angeordnet werden, um die Zelle zu bilden, der Streifen den freien Rand des Kollektors daran hindert, die Elektrolytschicht zu durchstechen und/oder aus demselben Grund die beiden Elektroden kurzzuschließen, wobei der Isolierstreifen gleichfalls die Isolierung zwischen dem Kollektor und der negativen Elektrode sicherstellen kann, wenn der Elektrolyt kürzer ist als der Kollektor oder wenn der Kollektor aus einem Material gebildet ist, welches mit dem Lithium elektrochemisch reagiert, wie etwa das metallisierte Polyester.

2. Elektrochemische Zelle nach Anspruch 1, dadurch gekennzeichnet, daß der Streifen aus Isoliermaterial heißsiegelbar ist, so daß der mit dem Kollektor in Kontakt befindliche Teil des letzteren auf diesem letzteren heißverklebt werden kann.

3. Elektrochemische Zelle nach Anspruch 1, dadurch gekennzeichnet, daß das Material der Elektrolytschicht leicht klebend ist und der Streifen aus Isoliermaterial nicht heißsiegelbar ist, was dazu führt, daß die Haftung mit der Elektrolytschicht alleine durch diese letztere sichergestellt ist.

4. Elektrochemische Zelle nach Anspruch 3, dadurch gekennzeichnet, daß der Streifen aus Isoliermaterial auf der Elektrolytschicht zwischen dieser letzteren und der Schicht der negativen Elektrode angeordnet ist, so daß er den freien Rand des Kollektors übergreift und schützt.

5. Elektrochemische Zelle nach Anspruch 3, dadurch gekennzeichnet, daß der Streifen aus nicht heißsiegelbarem Isoliermaterial unter der Elektrolytschicht zwischen dieser letzteren und der Kollektorschicht angeordnet ist, wobei der Streifen aus Isoliermaterial auf dem freien Rand des Kollektors sitzt und die positive Elektrode und der Streifen aus Isoliermaterial nebeneinander angeordnet sind.

6. Elektrochemische Zelle nach Anspruch 1, dadurch gekennzeichnet, daß der Streifen aus Isoliermaterial eine Dicke zwischen etwa 5 µ und 50 µ aufweist.

7. Elektrochemische Zelle nach Anspruch 1, dadurch gekennzeichnet, daß die Dicke des Streifens aus Isoliermaterial etwa 25 µ beträgt, wenn es heißsiegelbar ist.

8. Elektrochemische Zelle nach Anspruch 1, dadurch gekennzeichnet, daß die Dicke des Streifens aus Isoliermaterial etwa 8 µ beträgt, wenn es nicht heißsiegelbar ist.

9. Elektrochemische Zelle nach Anspruch 1, dadurch gekennzeichnet, daß der Streifen aus Isoliermaterial thermoplastisch, heißvernetzbar und mit den anderen Materialien der Zelle verträglich ist.

10. Elektrochemische Zelle nach Anspruch 9, dadurch gekennzeichnet, daß der Streifen aus Isoliermaterial entweder aus Polypropylen oder aus Polyethylen ist, oder aus durch eine dünne Schicht aus Polyethylen oder Polypropylen von etwa 1 bis 10 µ bedecktem TEFLON, FEP-Polyester oder Polyamid ist.

11. Elektrochemische Zelle nach Anspruch 9, dadurch gekennzeichnet, daß der Streifen aus Isoliermaterial auf dem Kollektor mittels eines heißsiegelbaren oder thermoplastischen Klebstoffs heißverklebt ist, welcher mit den Elementen der Zelle verträglich ist.

12. Elektrochemische Zelle nach Anspruch 11, dadurch gekennzeichnet, daß der Klebstoff eine Dicke zwischen etwa 1 und 10 µ aufweist.

13. Elektrochemische Zelle nach Anspruch 12, dadurch gekennzeichnet, daß die Dicke des Klebstoffs etwa 1 bis 2 µ beträgt.

14. Elektrochemische Zelle nach Anspruch 11, dadurch gekennzeichnet, daß der Klebstoff TRANSCOTE # 150 OPP ist.

15. Elektrochemische Zelle nach Anspruch 12, dadurch gekennzeichnet, daß der Streifen aus Isoliermaterial eine Breite zwischen etwa 3 und 125 mm aufweist.

16. Elektrochemische Zelle nach Anspruch 13, dadurch gekennzeichnet, daß die Breite des Streifens aus Isoliermaterial etwa 6 mm beträgt.

17. Elektrochemische Zelle nach Anspruch 1, dadurch gekennzeichnet, daß der Streifen aus Isoliermaterial aus einem synthetischen Gewebe gebildet ist, welches chemisch und elektrochemisch isolierend und mit den Elementen der Zelle verträglich ist.

18. Verfahren zur Herstellung einer elektrochemischen Zelle, bei welchem man Schichten einer positiven Elektrode, eines Feststoff-Polymerelektrolyts sowie einer negativen Elektrode aus Lithium übereinander anordnet, die positive Elektrode in Kontakt mit einer Schicht eines metallischen Kollektors bringt, wobei die negative Elektrode durch einen Isolierfilm bedeckt ist, wobei man die Schicht der negativen Elektrode und die Kollektorschicht gegeneinander versetzt, um den seitlichen Stromabgriff zu erlauben, und man den freien Rand schützt, indem ein Streifen aus einem mit den Materialien der Elektroden, des Kollektors und des Elektrolyten nicht reagierenden und bei den Betriebstemperaturen der Zelle sich nicht deformierenden Isoliermaterial zwischen den die Zelle bildenden Schichten angeordnet wird, so daß, wenn man die verschiedenen Schichten einschließlich des Kollektors und des Isolierfilms schichtweise anordnet, um die Zelle zu bilden, der Streifen den freien Rand des Kollektors daran hindert, die Elektrolytschicht zu durchstechen und/oder die beiden Elektroden kurzzuschließen, wobei der Isolierstreifen gleichfalls die Isolierung zwischen dem Kollektor und der negativen Elektrode sicherstellen kann, wenn der Elektrolyt kürzer ist als der Kollektor oder wenn der Kollektor aus einem Material gebildet ist, welches mit dem Lithium elektrochemisch reagiert, wie etwa das metallisierte Polyester.

19. Verfahren nach Anspruch 18, dadurch gekennzeichnet, daß man den Streifen aus Isoliermaterial zwischen der Elektrolytschicht und der Kollektorschicht anordnet, und zwar auf dem freien Rand des Kollektors und derart, daß die positive Elektrode und der Streifen aus Isoliermaterial nebeneinander sind.

20. Verfahren nach Anspruch 19, dadurch gekennzeichnet, daß man einen Streifen aus heißsiegelbarem Isoliermaterial verwendet und daß man den Streifen auf dem Kollektor heißverklebt, um ihn an Ort und Stelle zu halten.

21. Verfahren nach Anspruch 18, dadurch gekennzeichnet, daß man eine Elektrolytschicht aus leicht klebendem Material und einen Streifen aus nicht heißsiegelbarem Isoliermaterial verwendet und daß der Streifen allein durch Haftung auf der Elektrolytschicht an Ort und Stelle bleibt.

22. Verfahren nach Anspruch 21, dadurch gekennzeichnet, daß man den Streifen aus nicht heißsiegelbarem Isoliermaterial auf der Elektrolytschicht anordnet, und zwar zwischen der letzteren und der Schicht der negativen Elektrode, so daß der Streifen den freien Rand des Kollektors übergreift und schützt.

23. Verfahren nach Anspruch 21, dadurch gekennzeichnet, daß man den Streifen aus nicht heißsiegelbarem Isoliermaterial unter der Elektrolytschicht zwischen der letzteren und der Schicht der positiven Elektrode anordnet, und zwar auf dem freien Rand des Kollektors, und daß man die positive Elektrode und den Streifen aus Isoliermaterial nebeneinander anordnet.
